(19)

Europäisches
Patentamt
European
Patent Office
Office européen
des brevets

(11)  **EP 2 060 367 A2**

(12)  **EUROPEAN PATENT APPLICATION**

(43) Date of publication:
    **20.05.2009  Bulletin 2009/21**

(51) Int Cl.:
    *B25J 9/04* (2006.01)      *B25J 9/10* (2006.01)
    *F16H 21/04* (2006.01)      *F16H 35/00* (2006.01)
    *B25J 9/00* (2006.01)      *B25J 18/04* (2006.01)

(21) Application number: **08166589.5**

(22) Date of filing: **14.10.2008**

(84) Designated Contracting States:
    **AT BE BG CH CY CZ DE DK EE ES FI FR GB GR
    HR HU IE IS IT LI LT LU LV MC MT NL NO PL PT
    RO SE SI SK TR**
    Designated Extension States:
    **AL BA MK RS**

(30) Priority: **16.11.2007  JP 2007298713**

(71) Applicant: **Aida Engineering Ltd.
    Sagamihara-shi,
    Kanagawa 229-1181 (JP)**

(72) Inventors:
    • **Ito, Takao
      Kanagawa (JP)**
    • **Shiriya, Shunichi
      Kanagawa (JP)**
    • **Nakoshi, Seiji
      Kanagawa (JP)**
    • **Ojima, Toshihiro
      Kanagawa (JP)**

(74) Representative: **Brookes Batchellor LLP
    102-108 Clerkenwell Road
    London EC1M 5SA (GB)**

(54)  **Transfer apparatus**

(57)    We describe a transferring apparatus which can transfer a work about linearly by synchronizing a first arm and a second arm, even when a pedestal and a transfer level are different, and to provide a large transferring apparatus using the transferring apparatus. The apparatus 10 is composed of a first arm 12 swingably provided around a first axis J1 of a pedestal 11, a second arm 13 whose length is different to the first arm is swingably provided around a second axis J2, a hand 14 attached to the front end of the second arm 13, and a first motor M1 to reciprocatingly swings the first arm provided in the pedestal 11. A first pinion 16 is fixed to the pedestal 11 concentrically to the first shaft J1, and a second pinion 17 is fixed to the base end of the second arm 13 concentrically with the second axis J2. Further, racks 18, 19 are provided in the both of left and right side of the first pinion 16 and the second pinion 17. A large transferring apparatus is composed so that two transferring apparatus 10 are arranged in one pair, the hand 14 are mutually coupled by a transfer beam.

Fig. 2

EP 2 060 367 A2

## Description

The present invention relates to a transferring apparatus, particularly to a transferring apparatus used for supplying and retrieving a semi-processed work to and from a pressing machine or stamping machine, and to a large transferring apparatus using two transferring apparatuses which transfer a large work by holding with more than two places spaced widely.

The background state of the art includes: Japanese Published Patent Application No.S52-121262; Japanese Published Patent Application No.H06-143183; Japanese Published Patent Application No.2000-233393; Japanese Published Patent Application No.2002-66976; Japanese Published Patent Application No.2005-238381; and Japanese Published Patent Application No.2005-161406.

. In Japanese Published Patent Application No.S52-121262, an arm operating apparatus is disclosed. In this apparatus, a first arm is rotatably attached to a pedestal and a second arm, whose length is same as the first arm, is rotatably coupled to the front end of the first arm. The belt is wrapped between a first pulley fixed to the pedestal and a second pulley fixed to the base end of the second arm. The diameter of the second pulley is made to be 1/2 of the diameter of the first pulley. The first arm swings reciprocatingly by a motor. Therefore, by driving the motor reciprocatingly, the first arm swings and the second arm also swings as the same angle as the first arm synchronized with the first arm through the pully and the belt. Resultantly, the grip portion attached to the front end of the second arm operates reciprocatingly in liner motion.

. Further, in Japanese Published Patent Application No.S52-121262, an apparatus to parallely move a gripping portion is disclosed. In this apparatus, a belt is wrapped between a fixed pulley fixed to the pedestal and the intermediate pulley which is concentric with the second pulley and which has the same diameter as the first pulley. A driven pulley of the same diameter as the intermediate pulley, is fixed to the grip portion. The belt is wrapped between the intermediate pulley and the driven pulley.

In Japanese Published Patent Application No.H06-143183, a handling robot having a first arm and a second arm similar to those of Japanese Published Patent Application No.S52-121262 is disclosed. In this robot, the pedestal is rotated horizontally, and the grip portion is rotated by a motor attached to the joint portion of the second arm and the first arm through the pulley and the belt.

In Japanese Published Patent Application No.2000-233393, a work-retrieving apparatus having a first arm and a second arm and which is similar to Japanese Published Patent Application No.S52-121262 is disclosed. In this apparatus, the first arm is rotated or driven by the first motor attached to a pedestal, and the second arm is rotated by a second motor through the pulley and the belt. In this, the chuck portion (grip portion) attached to the front end of the second arm can be moved to the arbitrary position in a vertical plane and with arbitrary trajectory by two axis control. The two axis control can independently rotate the first arm and the second arm. For example, it can be moved up and down to retrieve the molded object from the extrusion molding machine, and it can move the object horizontally to a predetermined position. The length of the first arm and the second arm may be not identical.

Japanese Published Patent Application No.2002-66976 discloses a vacuum robot for transferring substrates and which similar to that of Japanese Published Patent Application No.2000-233393, in that the first arm and the second arm are made to operate independently. Additionally, in Japanese Published Patent Application No.2005-238381, a transferring apparatus of horizontal revolution type similar to that of Japanese Published Patent Application No.H06-143183 is disclosed. The apparatus has a tilt mechanism to be capable of controlling the angle of a hand independently to a second arm.

In Japanese Published Patent Application No.2005-161406, a work-transferring apparatus in a tandem press line is disclosed. This apparatus has a pair of beams installed between adjacent press machines; a carrier running along the beam; a swinging table swingably hanged to the carrier and being swingingly driven; a feed lever provided by the swinging table through the linear moving mechanism (extend/retract mechanism). In this work transferring apparatus, lengthwise or longitudinal movement of back and forth of the carrier, back and forth swing of the swinging table, the extension and retraction of the feed lever are independently operated. These operations are combined to carry out the work transfer between the pressing machines of the tandem press line. Stated differently, by swinging the swing table while the carriers move between the pressing machines, and extending and retracting the feed lever tune with the swing, the up and down movement to retrieve the work, the forward movement to the next press machine, the up and down movement to release the work, the backward movement to retrieve the next work are sequentially be carried out.

Further, in Japanese Published Patent Application No.2005-161406, the arm equipped with the vacuum cup is further provided swingably at the front end of the feed lever extending and retracting from the swinging table. Moreover, transferring apparatus for large machines is disclosed, in which the work transferring apparatuses provided as the pair in left and right, support the cross bar extending left and right, and the vacuum cup provided in the cross bar holds the work

The apparatus of Japanese Published Patent Application No.S52-121262 has a merit that while having a joint type structure suitable for transferring a comparatively heavy work, it can transfer the work linearly. However, the length of the first arm and the length of the second arm are identical, so it is necessary to adapt the height of the pedestal to the transfer level. Hence, in the case of transferring at a level higher than the floor, it is necessary to adapt the height of the pedestal of the robot to the transfer level, such as in the case that the installed position of the pedestal and the mounted position of the work, for example, the pressing die is different. This is same for the handling robot of Japanese Published Patent Application No.H06-143183, even if the first arm and the second arm are changed so as to turn around a horizontal axis to make it suitable for the transfer of a heavy load.

The product retrieving apparatus of Japanese Published Patent Application No.2000-233393 independently controls a first arm and a second arm. In this, even if the point that the lengths of the arms are not identical can be applied to the apparatus of Japanese Published Patent Application No.S52-121262 in which the arms are synchronously swung; it cannot perform linear transfer if nothing is done. This is also same for the Japanese Published Patent Application No.2002-66976. Moreover, in the transferring apparatus of Japanese Published Patent Application No.2005-238381, the lengths of the first arm and the second arm are equal (see paragraph [0014]).

The work-transferring apparatus of Japanese Published Patent Application No.2005-161406 performs up and down movement and forward and backward movement by combining the swinging of a swinging table. Therefore, the linear movement (extend/retract) of a feed arm is achieved, but it needs a large stroke in the linear movement mechanism, making it unsuitable for high speed transfer.

The present invention is directed to provide a transferring apparatus which can transfer a work at high speed linearly by synchronizing mechanically a first arm and a second arm which are rotatably coupled. Further, this invention is directed secondly to provide a large transferring apparatus suitable for a heavy load using this transferring apparatus.

A transferring apparatus of this invention (claim 1) comprises a pedestal having a first axis, a first arm having a base end and a front end, a second arm having a length different to the first arm and having a base end and a front end, a hand attached to the front end of the second arm, and a drive means to swing the first arm reciprocatingly. The first arm is swingably provided around the first axis, and the front end is equipped with a second axis parallel with the first axis. The second arm is swingably provided around the second axis. The transferring apparatus further has a first circular plate having a center and a periphery, a second circular plate having a center and a periphery, and a torque transmission means interposed between the periphery of the first circular plate and the periphery of the second circular plate. The first circular plate is attached to the pedestal, and the center is within the first axis. The second circular plate attached to the base end of the second arm, and the center is within the second axis. The torque transmission swings the second arm synchronously with the first arm. Further, in the transferring apparatus, a ratio of a diameter of the first circular plate and a diameter of the second circular plate is set so that the front end of the second arm moves about linearly when the second arm swings synchronously with the first arm.

In such transferring apparatus, it is preferable that an angle adjusting mechanism of the second arm to adjust the angle of the first circular plate is provided (claim 2). Further, a parallel movement mechanism is preferably provided, which maintains the hand at a predetermined angle always with respect to a rest frame regardless of the turn of the first arm (claim 3).

The second aspect of this invention (claim 4) provides a transferring apparatus comprising a pedestal having a first axis, a first arm having a base end and a front end, a second arm having a base end and a front end, a third arm having a front end, a hand attached to the front end of the third arm, and a drive means to swing the first arm reciprocatingly. The first arm is swingably provided around the first axis, and the front end is equipped a second axis parallel with the first axis. The second arm is swingably provided around the second axis. The third arm protrudes from the front end of the second arm and the third arm performs liner motion against the second arm. The second aspect of the transferring apparatus further comprises a first circular plate having a center and a periphery, a second circular plate having a center and a periphery, a torque transmission means interposed between the periphery of the first circular plate and the periphery of the second circular plate, an extend/retract drive means to extend and retract the third arm, and a control means to control so that the front end of the third arm moves about linearly accompanying with a swing of the first arm. The first circular plate is attached to the pedestal and the center is within the first axis. The second circular plate is attached to the base end of the second arm and the center is within the second axis. The torque transmission swings the second arm synchronously with the first arm.

Preferably, a tilt mechanism to swing the hand around the front end of the second arm or the front end of the third arm is provided (claim 5).

It is preferable that the first circular plate and the second circular plate are pinions, and that the torque transmission means is equipped with a rack meshing with these pinions (claim 6). In this case, it is preferable that the pair of racks are arranged at both side in left and right of a line connecting the first axis and the second axis, and at least one pinion is provided so as to tolerate the variation of the distance to the other pinion. Further, at the same time, the one pinion is energized or forced in a departing direction or an approaching direction to the other pinion (claim 7).

A large transferring apparatus of this invention (claim 8) comprises the transferring apparatus of the above invention arranged as one pair in left and right of processing machine, a beam to interconnect the hands of these transferring apparatuses, and a work holding means provided in the beam. In this large transferring apparatus, the first axis and the second axis of the left and the right transferring apparatus are arranged concentrically to each other. Further, the first axis and the second axis extend perpendicular to the transfer direction of the work and horizontally, and the each left and the right drive means mutually operate synchronously.

In the transferring apparatus of this invention (claim 1), since the length of the first arm and the second arm is different, it is not necessary to adapt the pedestal to the transfer line, allowing the installation at a suitable position. Further, because the ratio of the first circular plate and the second circular plate is set to move the front end of the second arm about linearly when the second arm swings synchronously with the first arm, even though the length of the first arm and the second arm is different. Therefore, it is possible to perform the transfer similar to the conventional transferring apparatuses.

The transferring apparatus equipped with an angle adjusting mechanism of the second arm to adjust the fixed angle of the first circular plate (claim 2), can tilt the moving trajectory of the hand to a reference position by shifting the phase of the second arm by adjusting the fixed angle.

Moreover, the transferring apparatus may be equipped with a parallel movement mechanism to maintain the hand at a predetermined angle with respect to a rest frame regardless of the swing of the first arm (claim 3). Since the posture of a work does not change when the hand moves, the design or the planning of the hand and the positioning jig etc. are easy.

In the second aspect of the transferring apparatus of this invention (claim 4), since fundamental movements can be achieved by the joint type first arm and the joint type second arm, rapid linear movement is possible. Moreover, appearing and disappearing of the third arm from the front end of the second arm allow fine movements such as avoiding a pressing die. Further, the transferring apparatus which is equipped with a tilt mechanism swinging the hand to the second arm (claim 5), can change the angle of a work when in transferring a work and in mounting it on a jig etc. Hence, it is possible to transfer at an angle suitable for transferring, and to mount at an angle suitable for mounting.

The first circular plate and the second circular plate may be pinions, and the torque transmission means may equipped with racks meshing with these pinions (claim 6). It can make the torque transmissibility large compared with that using a belt. It may be that the racks are arranged at both sides as a left and right pair on a line connecting the first axis and the second axis, and at least one pinion is provided so as to tolerate the variation of the distance to the other pinion, and one pinion is energized in a direction to depart from or to become close to the other pinion (claim 7). In this case, it transmits power from the first pinion to the second pinion through the rack in the side without backlash when the first arm turns to one direction, and transmits power through the other rack without backlash in its direction when it turns to the other direction. Hence, the vibration due to the backlash can be suppressed, when the swing direction of the first arm changes.

In the large transferring apparatus of this invention (claim 8), the transferring apparatuses arranged as one pair in the left and right of a processing machine transfer one sheet or one each of work in a coordinated manner, thereby the weight imposed on one apparatus becomes small. Further, the edge portion of a work can be stably held and the load are reduced, therefore the load torque applied to the hand becomes small.

The above and other aspects of the present invention will now be described in further detail, by way of example only, with reference to the drawings, in which:

Figure 1 is a side cross section showing an embodiment of the transferring apparatus of this invention;
Figure 2a and Figure 2b are respectively a simplified front view and a front view showing the working status of the transferring apparatus of this invention;
Figure 3 is a skeleton drawing showing the working status of the arm of Figure 1;
Figure 4 is a front view showing the status in which the second arm only is turned from the status of Figure 2a;
Figure 5 is a skeleton drawing showing the working status of the arm from the status of Figure 4;
Figure 6a is a front view showing an embodiment of the tilt mechanism related to this invention, Figure 6b and Figure 6c are explanatory drawings of the working status of the tilt mechanism;
Figure 7a is a front view showing the other embodiment of the tilt mechanism related to this invention, Figure 7b and Figure 7c are explanatory drawings of the working status of the tilt mechanism;
Figure 8, Figure 9, and Figure 10 are respectively the front view, plan view, and side view showing an embodiment of the large transferring apparatus of this invention;
Figure 11a, Figure 11b, and Figure 11c are respectively outline explanatory drawings showing the other embodiment of the power transmission mechanism of the first arm related to this invention;
Figure 12a and Figure 12b are respectively outline explanatory drawings showing further the other embodiment of the power transmission mechanism of the first arm related to this invention;
Figure 13a and Figure 13b are a front view and a side view showing the embodiment of the extend/retract arm related to the transferring apparatus of this invention;
Figure 14a is a back view of the extend/retract arm, Figure 14b is a front view showing the internal structure of the third arm of the extend/retract arm;
Figure 15 is a front view showing the embodiment of the transferring apparatus equipped with the extend/retract arm of Figure 13a; and

Figure 16 is a side view showing the working status of the transferring apparatus.

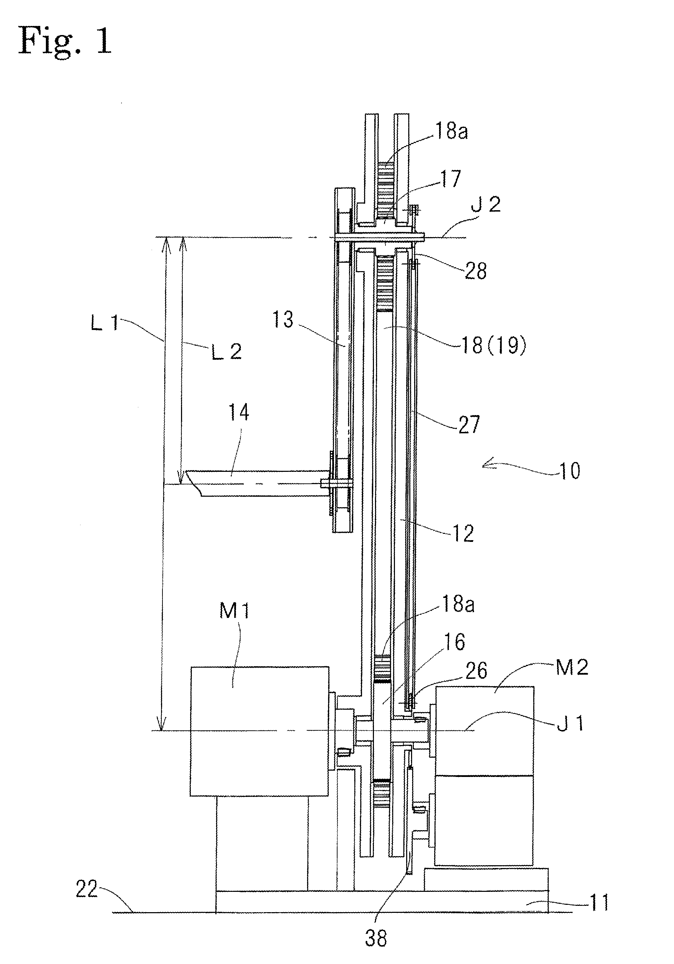

Referring in detail to the figures, the transferring apparatus 10 shown in Figure 1 comprises a pedestal 11, a first arm 12 of which the base end is swingably provided to the pedestal and is extended upward in a reference position, a second arm 13 which is provided swingably in the upper end of the first arm and is extended downward in the reference position, a hand 14 attached to the front end of the second arm, and a first motor M1 to reciprocatingly swings the first arm 12 to the pedestal 11. In this embodiment, the center J1 (a first axis) of rotation or swing of the first arm 12 and the center J2 (a second axis) of rotation or swing of the second arm 13 are horizontal respectively and in parallel mutually.

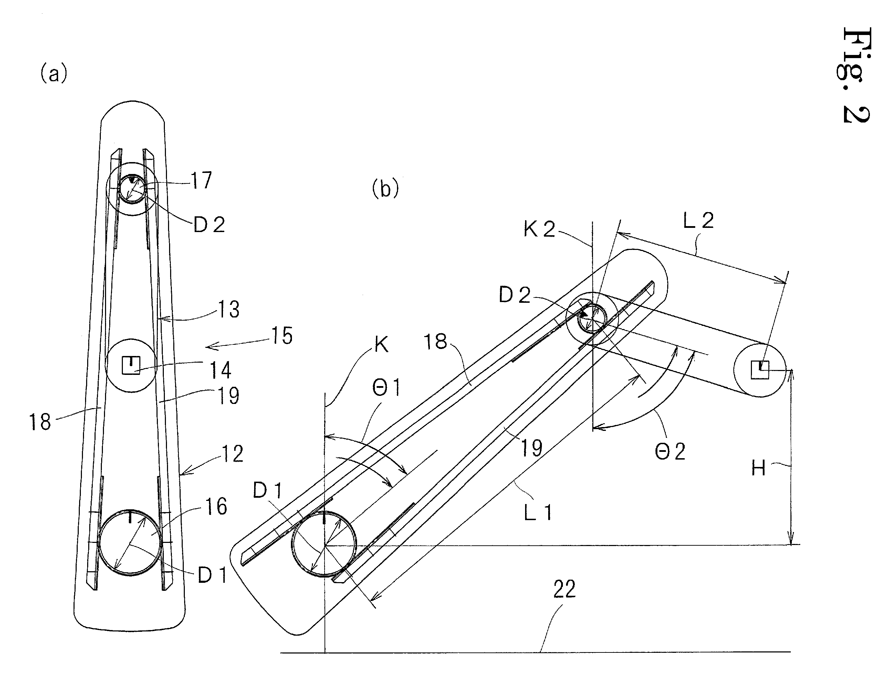

Further this transferring apparatus 10 further comprises a synchronous swinging mechanism 15 to swing the second arm 13 synchronously with the swing of the first arm 12, as shown in Figure 2a. This mechanism 15 is equipped with a first pinion 16 installed so as not to move to the pedestal 11, a second pinion 17 rotatably provided around the second axis J2 and fixed to the second arm 13, and one pair of left and right racks 18, 19 which mesh with those pinions 16, 17 and move up and down along the first arm 12. But, the racks 18, 19 may be the one of either the left or the right.

In addition, as shown in Figure 1, the first pinion 16 is attached to the pedestal 11 through a second motor M2 which is a component of a later described second arm angle adjusting mechanism 20. It does not rotate as far as the second motor M2 does not rotate. Moreover, in the racks 18, 19, teeth 18a, 19a are formed in the portion only where meshing with the pinions 16, 17, and the racks 18, 19 are supported slidably by the first arm 12.

And, in this transferring apparatus 10, the length L2 of the second arm 13 (the distance between the center J2 of rotation of the second arm and the hand 14) is shorter than the length L1 of the first arm (the distance between the first axis J1 and the second axis J2). It is about 1/2 of the length L1 of the first arm 12. And, the diameter D2 of the second pinion (the diameter of the pitch circle) is about 9/23 of the diameter D1 of the first pinion 16, which is made to be smaller than 1/2.

In the transferring apparatus 10 composed as above, when the first motor M1 rotates in one direction, the first arm 12 coupled to the output shaft of the motor M1 swings as much as angle $\theta$ 1 clockwise, for example, as shown in Figure 2b, around the first axis J1. Additionally, the reference numeral K is a reference line of vertical direction. At this moment, since the first pinion 16 does not rotate, the one rack 18 supported by the first arm 12 descends toward the base end side of the first arm 12. And the other rack 19 performs linear movement so as to ascend toward the front end side. Accompanying the movement of the racks 18, 19 in the opposite direction, the second pinion 17 swings anti-clockwise until angle $\theta$ 2 to the vertical line. Additionally the reference numeral 22 is a floor face.

At this moment, the height H of the second arm 13 (The vertical distance between the first axis J1 and the hand 14) becomes

$$H = L1\cos\theta\,1 - L2\cos\theta\,2.$$

And, if the ratio of the diameter D1/D2 of the first pinion 16 and the second pinion 17 is set to i (D1/D2=i), since $\theta$ 2=i $\theta$ 1 - $\theta$ 1, it becomes

$$H = L1\cos\theta\,1 - L2\cos(i\,\theta\,1 - \theta\,1).$$

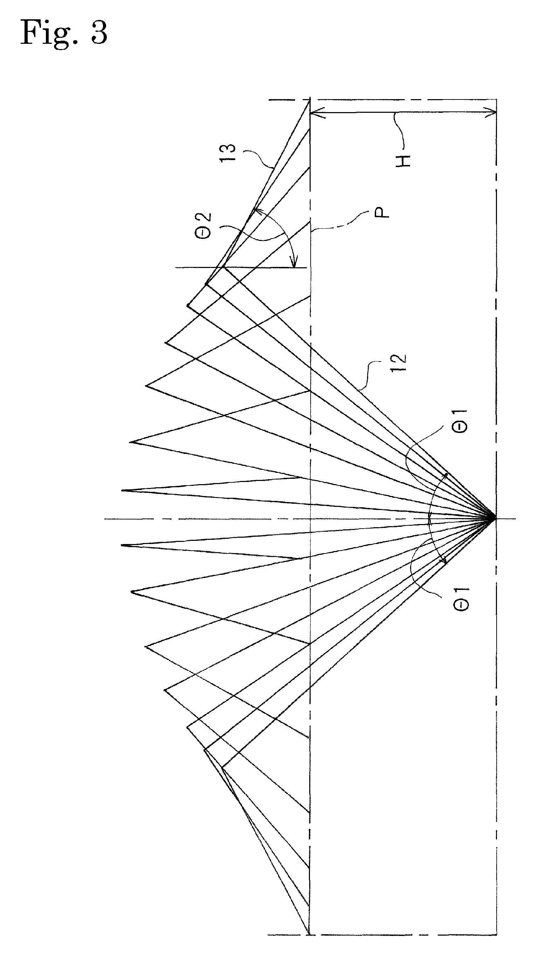

The graph of the relation between the height H and the angle $\theta$ 1 of the first arm is shown in Figure 2b and Figure 3. As seen in the figures, the front end of the second arm 13 moves closer to a horizontal line shown by the chain line P.

If the length of the first arm 12 and the second arm 13 is equal, and the diameter D2 of the second pinion 17 is 1/2 of the diameter D1 of the first pinion 16, the front end of the second arm 13 moves horizontally strictly, as the apparatus of Japanese Patent Application S52-121262. But since in this transferring apparatus 10, the length of the first arm 12 is about twice of the length L2 of the second arm, and the ratio of the diameter D1 of the first pinion 16 and the diameter D2 of the second pinion 17 is about 23/9, the movement of the front end of the second arm does not becomes strictly horizontal. It deviates from the horizontal line along the way, but it is not much a problem in practice.

Additionally, in order to make the height H, when the angle of the first arm 12 is $\theta$ 1, equal to the height L1-L2 in the reference position, stated differently, to make it as L1-L2= L1cos $\theta$ 1-L2cos (i $\theta$ 1- $\theta$ 1), it is sufficient to make it as i=1+[cos-1{L1 • (cos $\theta$ 1-1)+L2}/L2]/ $\theta$ 1.

From this equation, the suitable ratio of the diameter of the first pinion and the second pinion can be calculated, based on the length of the first arm and the length of the second arm as well as the final angle $\theta$ 1.

As described above, in the transferring apparatus 10 of Figure 1 and Figure 2a, the length L2 of the second arm 13 is shorted than the length L1 of the first arm. But the ratio of the diameter D1 of the first pinion 16 and the diameter D2 of the second pinion 17 are suitably selected, as shown in Figure 2b and Figure 3. Therefore, the hand 14 of the front end of the second arm 13 can be moved about horizontally. Further, as found from Figure 2b, in the status that the first arm 12 is swung large to the reference line K, the second arm 13 swings further large to the vertical straight line K2. Hence, it is easy for the hand 14 provided in the front end of the second arm 13 to retrieve a work from or to supply a work to such a narrow place, such as between an upper pressing die and a lower pressing die of a press machine. In addition, when the first motor M1 is rotated reversely from the state of Figure 2b, it returns to the state of Figure 2a via the same trajectory.

In the case of Figure 3, the first arm 12 is swung as much as the identical angle from the reference line to the front side and the back side. By swinging back and forth as thus, a work which is press-worked in the foregoing process of the left edge can be moved to the next pressing die. But, the swinging angle of first arm 12 is not necessary to be made identical in the fore and back. Moreover, it can be selected suitably according to the shape of the work to be transferred, the jig or the pressing die to retrieve the work, and the jig or the pressing die of the next process to which the work is supplied.

When the length of the second arm 13 is shortened as described above, even when the pedestal 11 is installed on the floor face 22, the work can be transferred with the transfer level higher than the floor face. Hence, when the work supplying height (the height of the upper face of a pressing die) of the machine is higher than the floor face, it is not necessary to make the pedestal 11 high. Further, since the second arm 13 which is provided at the tip side of the apparatus and which moves largely, can be made light, thereby the whole inertia becomes small and the power of the first motor M1 can be made small.

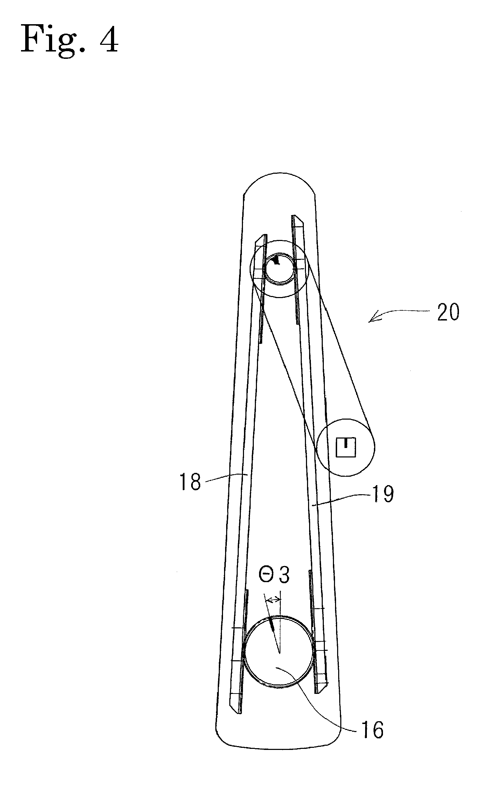

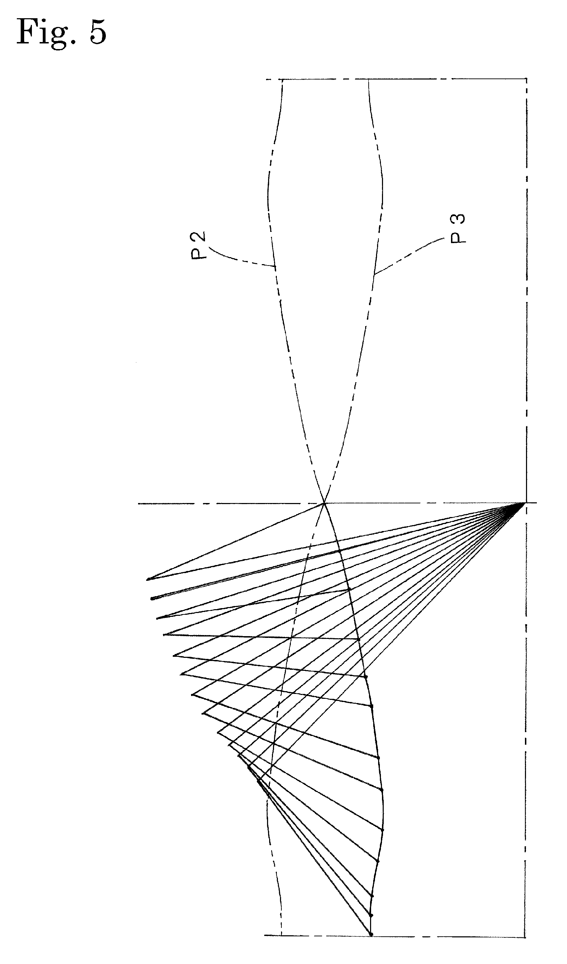

Next, the angle adjusting mechanism 20 of the second arm is described with reference to Figure 1 and Figure 4. This angle adjusting mechanism 20 of the second arm is that in which the second motor M2 is connected to the first pinion 16 and the second arm 13 only is made to be advanced or delayed as much as the predetermined angle θ 3, while the first arm 12 remains stationary. When the phase of the second arm 13 is made to be advanced as much as θ 3 and the first arm 12 is swung by driving the first motor M1, the hand 14 of the front end of the second arm 13 moves along the inclined transfer line as shown by the chain line P2 in Figure 5. Accordingly, in the case that there are obstacles in its way, transfer can be carried out via a path which avoids the interference with the obstacles. Inversely, in the case that the transfer is carried out with its movement being delayed, it becomes a transfer line inversely inclined, as shown in the imaginary line P3.

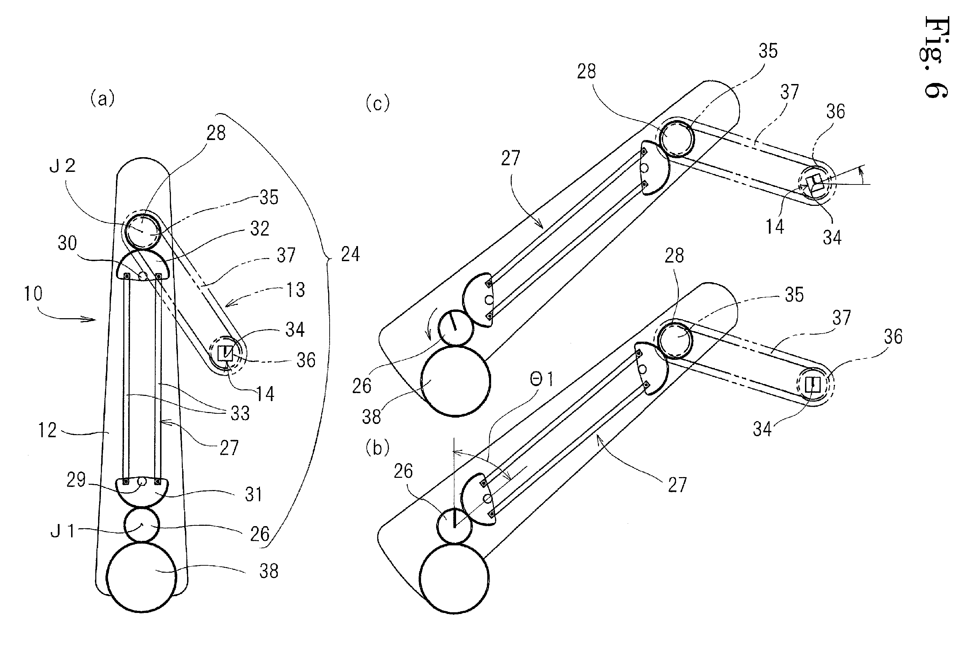

Next, the parallel movement mechanism 24 of the hand and the tilt mechanism 25 are described with reference to Figure 1 and Figure 6a. As shown in Figure 1 and Figure 6a, a first gear 26 is provided concentrically to the first axis J1. This first gear 26 is coupled to the second gear 28 which is provided rotatably concentrically to the second axis J2 through a torque transmission mechanism 27. The torque transmission mechanism 27 comprises semi-circular sector gears 31, 32 provided rotatably around shafts 29, 30 supported respectively by the first arm 12, a link 33 coupling those sector gears 31, 32. The link 33 is composed of two units which is one pair of the left and the right, but it may be one unit. Moreover, in place of the torque transmission mechanism 27 of link system, the other torque transmission mechanism such as a chain, a pulley, a timing pulley can be adopted.

On the other hand, the hand 14 of the front end of the second arm 13 is supported rotatably in the second arm 13 by a shaft 34. A first timing pulley 35 is coupled to the second gear 28 so as to co-rotate, and a second timing pulley 36 is fixed to the shaft 34 so as to co-rotate. The timing pulleys (geared pulley) 35, 36 are mutually coupled by a timing belt 37 (geared belt) which is a wrapping connector. The gear ratio of the first gear 26 and the second gear 28 is 1, and the gear ratio of the first timing pulley 35 and the second timing pulley 36 is also 1. Thereby, the first gear 26, the torque transmission mechanism 27, the second gear 28, the first timing pulley 37, and the second timing pulley 36 composes a parallel movement mechanism 24 of the hand.

Further in this transferring apparatus 10, a third motor M3 is provided in the pedestal 11. And a drive gear 38 coupled to the output shaft of the third motor M3 is meshed with the first gear 26 to constitute a tilt mechanism of the hand.

In the transferring apparatus 10 composed as described above, when the first arm 12 is swung as much as angle θ 1, while the third motor M3 is stopped, since the first gear 26 remains stationary, the first gear 26 turns as much as angle θ 1 in the reverse direction to the first arm 12 (see Figure 6b). The rotation is transmitted to the second gear 28 through the torque transmission mechanism 27, and the second gear 28 also rotates as much as angle θ 1 in the reverse direction to the first arm 12. Accordingly, the second gear 28 does not rotate with respect to the rest frame. The motion of the second gear 28 is transmitted to the shaft 34 of the hand 14 through the first timing pulley 35, the timing belt 37, and the second timing pulley 36. This shaft 34 also does not rotate with respect to the rest frame similar to those described above. Accordingly, even when the second arm 13 swings accompanying the swing of the first arm 12, the hand 14 moves about horizontally maintaining the original angle (see Figure 6b). Thereby, the work held by the hand is transferred with its posture not changing, achieving parallel movement function.

When the angle of the work is desired to be changed while retrieving or supplying a work, the tilt mechanism is used. In other words, when the position of the first arm is placed in any of the position, the third motor M3 is rotated to rotate the drive gear 38. This rotation is transmitted to the first gear 26, and transmitted to the shaft 34 of the hand 14 through the torque transmission mechanism 27, the second gear 28, the first timing pulley 35, the timing belt 37, and the second timing pulley 36. And the hand 14 rotates as much as the same predetermined angle as the first gear 26 (see Figure 6c). Thereby, the posture of the work can be changed according to need.

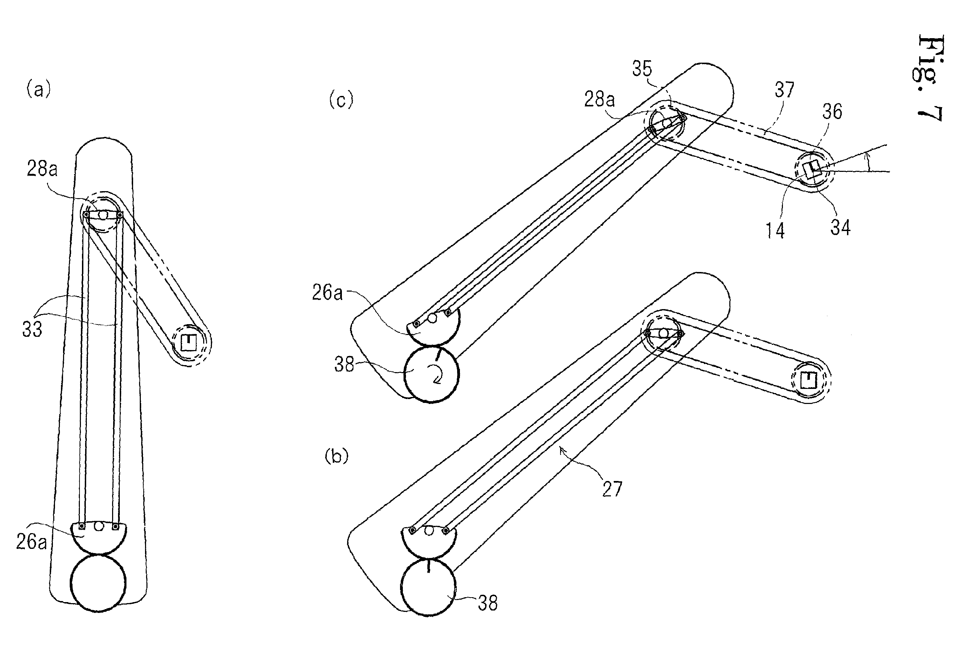

In the parallel movement mechanism and the tilt mechanism of Figure 6a, the torque transmission mechanism 27, equipped with two semi-circular sector gears 31, 32, is interposed between the first gear 26 and the second gear 28. Hence, it is also possible that the semi-circular sector gear 26a in place of the first gear and a rotating link 28a in place of the second gear are directly coupled by a link 33. Since it is advantageous to make the posture of the work constant, the parallel movement mechanism of Figure 6a or Figure 7a is usually made to be a standard equipment. But there is a case that the adjustment mechanism and the tilt mechanism of the second arm are not necessary, this is usually made to be an option, because the second motor M2 and the third motor M3 should be added.

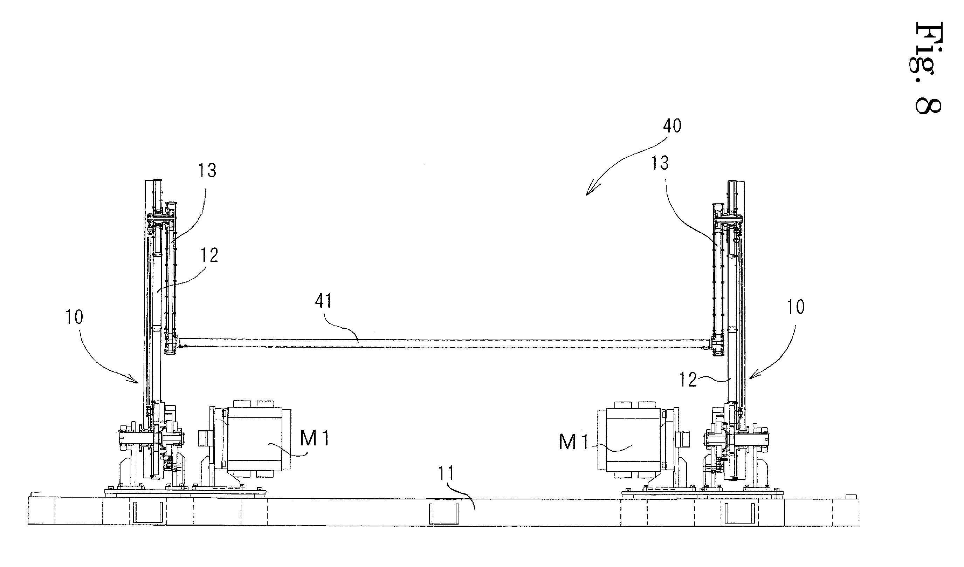

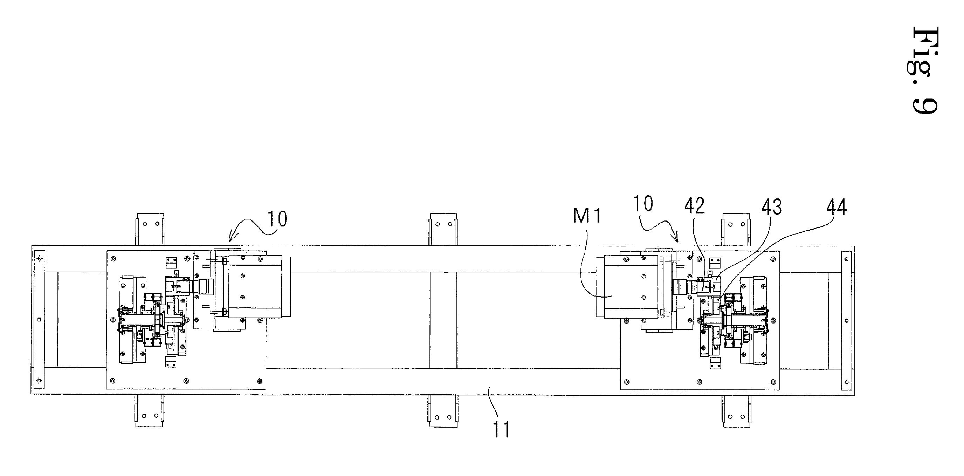

Next, the embodiment of the large transferring apparatus of this invention is described with reference to Figure 8 to Figure 10. In the large transferring apparatus 40 of Figure 8, the transferring apparatus 10 of Figure 1 is arranged to be one pair in left and right spaced at an interval, and at the same time, a common transfer beam 41 is used as a hand. A vacuum cup or gripper which actually holds a work is attached to the beam 41 detachably. And, in this embodiment, the left and the right transferring apparatus 10 is made to be planarly symmetrical, and as the pedestal 11, that which is common large one is used. The second arm adjusting mechanism and the tilt mechanism are not equipped. The output shaft 42 of the first motor M1 and the base end of the first arm 12 are coupled by a drive gear 43 fixed to an output shaft 42 and a driven gear 44 fixed to the first arm 12, as shown in Figure 9.

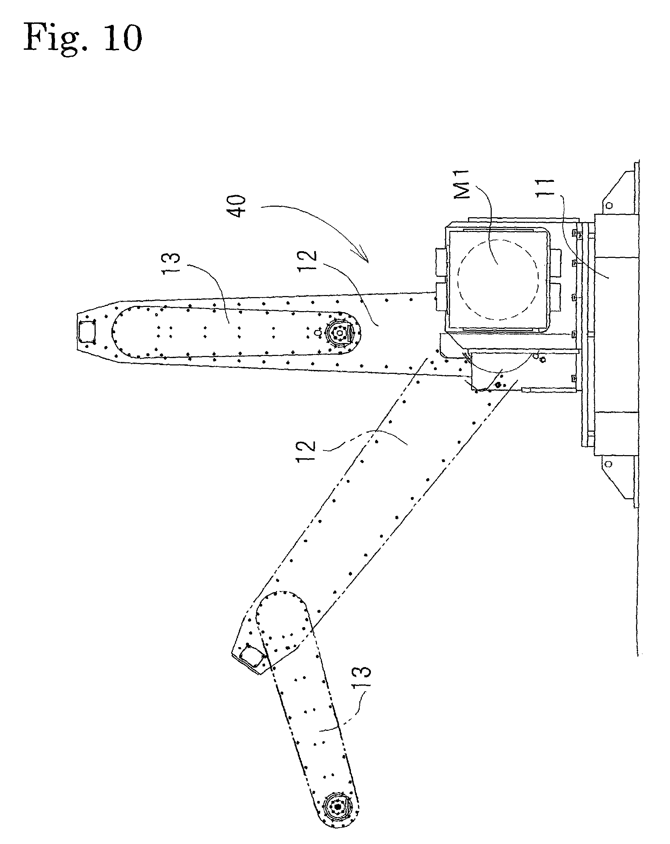

The motion of the large transferring apparatus 40 is substantially the same as the transferring apparatus 10 of Figure 1 as shown in Figure 10. And it can transfer one relatively large work in cooperation of the left and the right transferring apparatus 10. In this large transferring apparatus 40 also, the transfer distance can be lengthened by swinging left and right the first arm 12, same as the case of Figure 3. Therefore, the tilt angle of the second arm 13 becomes small in the position of retrieving and supplying the work, and it makes the retrieving and supplying of the work easy.

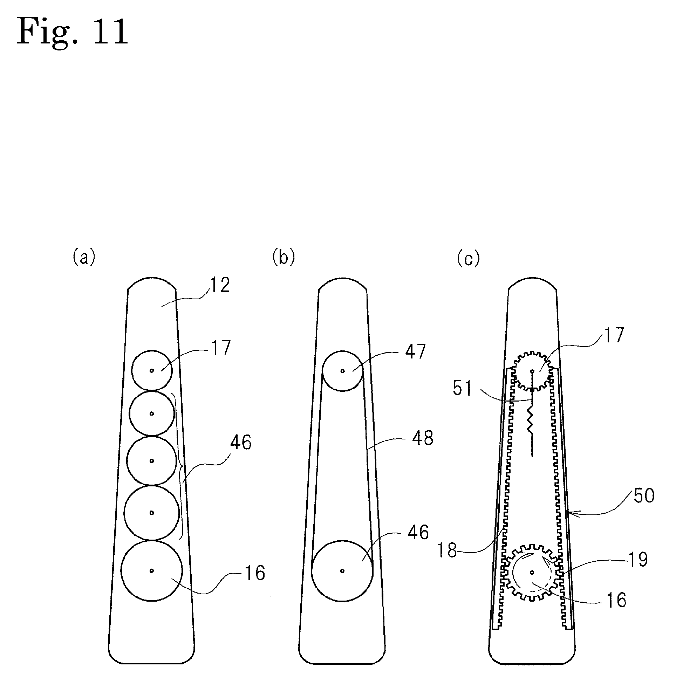

In the embodiment described above, the transmission of power from the first pinion to the second pinion is done by the racks, but, the power transmission can be done by a gear train, as shown in Figure 11a. Moreover, as shown in Figure 11b, it can be done by pulleys 46, 47 and a belt 48, or a timing pulley and a timing belt, further, it can be done by a sprocket and a chain.

In a first arm 50 of Figure 11c, the second pinion 17 is provided in some measure movable in the direction of the axis line of the arms to the first arm 50, and is energized to the first pinion 16 side by a spring 51. In this first arm 50, there is no clearance between the upper side of the teeth of the left and the right racks 18, 19 and the lower side of the teeth of the second pinion 17, and the clearance is brought together between the lower side of the left and the right racks 18, 19 and the upper side of the teeth of the second pinion 17. Further, there is no clearance between the lower side of the teeth of the left and the right racks 18, 19 and the upper side of the teeth of the first pinion 16, and the clearance is brought together between the upper side of the left and the right racks 18, 19 and the lower side of the teeth of the first pinion 16.

For making it easy to understand, considering that the first pinion 16 rotates clockwise, the left side of the first pinion 16, the left rack 18 and the left side of the second pinion 17 transmits power without clearance opposing the given energy, and rotates the second pinion 17 clockwise. At this moment, since there are clearances between the lower side of the teeth of the first pinion 16 and the upper side of the teeth of the right rack 19, and between the upper side of the teeth of the second pinion 17 and the lower side of the teeth of the right rack 19, the power is not transmitted through the right rack 19. Contrary, when the first pinion 16 rotates anti-clockwise, inversely to the above description, the right side of the first pinion 16, the right rack 19, and the right side of the second pinion 17 transmit the power without clearance opposing the given energy, and do not transmit the power through the left rack 18.

Since the right and the left racks 18, 19 alternately transmit the power responding to the rotating direction of the first pinion 16 as thus, regardless of the rotating direction of the first pinion 16, any of the rack and pinion transmits the power without clearance. Accordingly, when the direction of rotation of the first pinion 16 changes, in other words, the swinging direction of the first arm 50 changes, no backlash is generated. Thereby, the vibration of the second arm is suppressed. This effect is same as the case that the second pinion 17 is energized in the direction of the front end side of the first arm 50, in other words, the opposite side to the first pinion. Moreover, the first pinion 16 may be energized in the direction of the second pinion 17 side, or in the reverse direction. As the energizing means, other than a spring 51, such as a gas spring utilizing an air cylinder can be used.

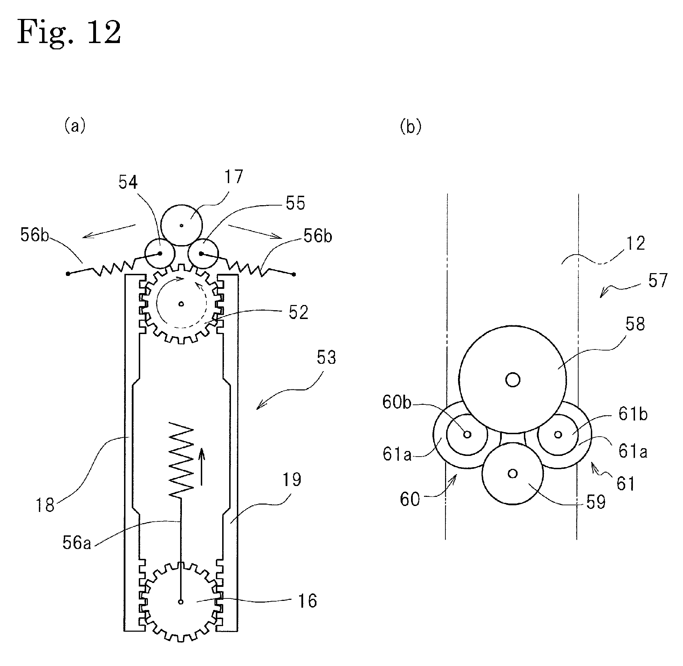

Figure 12a and Figure 12b show respectively the mechanism of the other embodiments which drive without backlash. In a mechanism 53 of Figure 12a, the racks 18, 19 are meshing with the both sides of the first pinion 16 and an intermediate pinion 52. The first pinion 16 is energized to the intermediate pinion 52 side by energizing means such as a spring 56a, same as the above described embodiment. And, while one pair of the left and the right idle gears 54, 55 meshes with the intermediate pinion 52, the second pinion 17 meshes with those idle gears 54, 55. Further, the left and right idle gears 54, 55 are energized in the direction of drawing apart mutually by an energizing means such as a spring 56b. In this mechanism 53 also, when the first pinion 16 rotates clockwise, the power is transmitted to the second pinion 17 without clearance through the left rack 18 and the left idle gear 54. And when it rotates anti-clockwise, the power is transmitted without clearance through the right rack 19 and the right idle gear 55. Accordingly, same as described above, when the swinging direction of the first arm changes, no backlash is generated.

In the mechanism 57 of Figure 12b, a driven gear 58 is fixed to the first arm 12 so as not to rotate. And, the rotation of the drive gear 59, driven by the first motor, transmits the power to the driven gear 58 respectively through the left and the right intermediate pinions 60, 61 provided rotatably in the first arm 12. In addition, the each intermediate pinion 60, 61 is fixed so that the large diameter gears 60a, 61a meshing with the drive gear 59 and the small diameter gears 60b, 61b meshing with the driven gear 58 are made to corotate.

In this mechanism 57, the direction of the backlash of the drive gear 59 and the large diameter gear 60a, and direction of the backlash of the small diameter gear 60b and the driven gear 58 are determined, so that the rotation is transmitted to the driven gear 58 without backlash through the left intermediate pinion 60 when the drive gear 59 rotates in one direction. And the direction of the backlash of the drive gear 59 and the large diameter gear 61a, and the direction of the back lash of the small diameter gear 61b and the driven gear 58 are adjusted so that the rotation is transmitted to the driven gear 58 without backlash through the right intermediate pinion 61 when the drive gear 59 rotates in the reverse direction. Therefore, the rotation of the first motor can be transmitted without backlash in any direction of the rotation, and it suppresses the vibration even when the swinging direction of the first arm changes same as the case of Figure 12a.

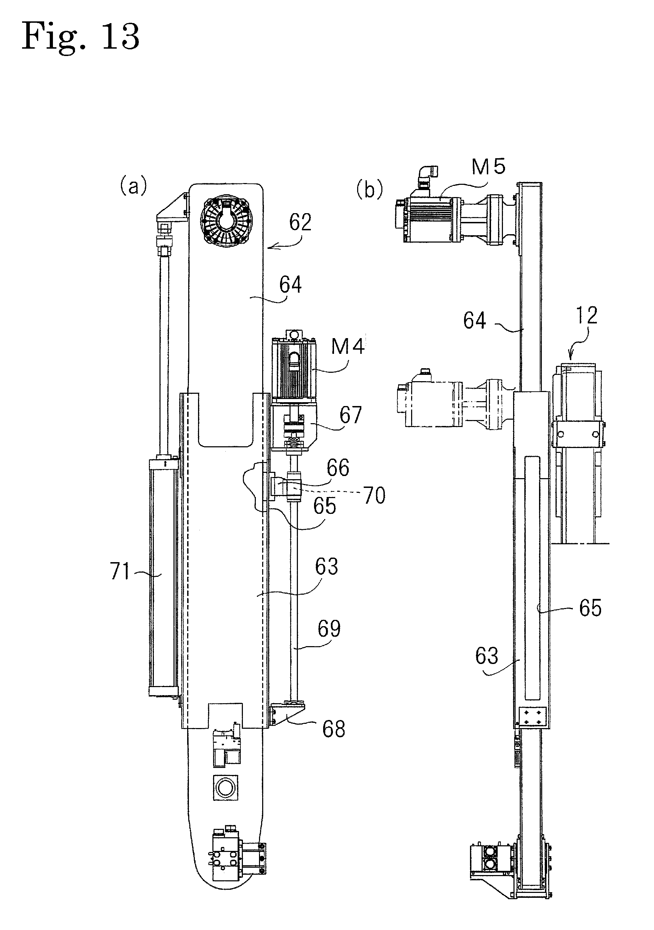

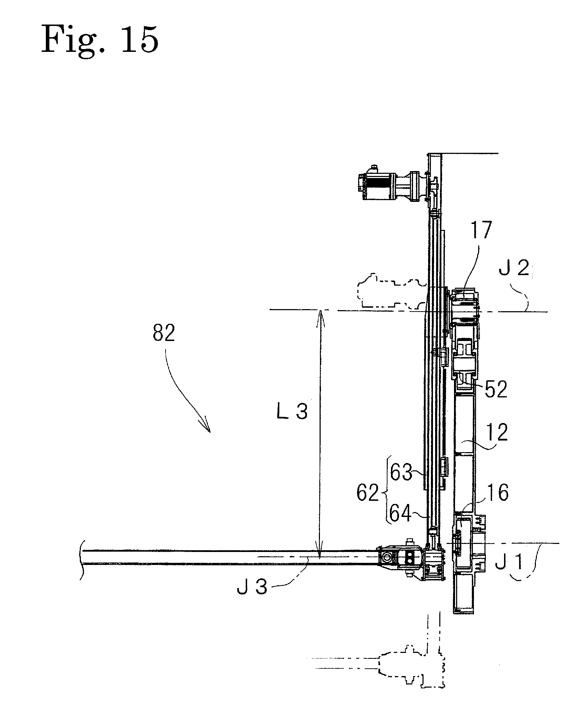

The extend/retract arm 62 shown in Figure 13a, Figure 13b is equivalent to the second arm 13 of the transferring apparatus 10 of Figure 1, Figure 2, and is provided with an extend/retract mechanism. The extend/retract arm 62 is equipped with a rectangular pipe like arm holder 63 attached rotatably to the first arm 12, and a sliding arm 64 housed slidably to the arm holder. Considering that the arm holder 63 is the second arm, the sliding arm 64 becomes a third arm provided slidably to the second arm. As shown in Figure 15, the shaft 17a of the second pinion 17 of the first arm 12 is fixed to the rear surface side of the upper end of the arm holder 63.

Moreover, as shown in Figure 13b, an opening 65 is formed in the side of the arm holder 63, and a nut holder 66 fixed to the side of the sliding arm 64 protrudingly from the opening 65. In Figure 13b, the nut 66 is omitted for easy understanding. In the side of the arm holder 63, upper and lower brackets 67, 68 are attached, and these brackets 67, 68 support a screw shaft 69 rotatably. The upper end of the screw shaft 69 is coupled with the output shaft of a forth motor M4. A nut 70 screwing together with the screw shaft 69 is fixed to the nut holder 66. In Figure 13b, the screw shaft 69 and the forth motor M4 etc. are also omitted.

In the extend/retract arm 62 composed as thus, when the forth motor M4 rotates in one direction, the screw shaft 69 rotates, the sliding arm 64 to which the nut 70 screwing together with the screw shaft descends, and its front end further protrudes from the lower end of the arm holder 63. Thereby, the extend/retract arm 62 extends. However, in this embodiment, the upper portion of the sliding arm 64 always protrudes from the upper end of the arm holder 63, therefore the term "extends" here means the distance between the turning center of (the second axis J2) of the arm holder 63 and the front end of the sliding arm 64 and the substantial whole length of the extend/retract arm 62 (the length of the sliding arm 64) does not change. When the forth motor M4 rotates in the inverse direction, the sliding arm 64 ascends and its front end moves toward the direction of withdrawing. Thereby, the extend/retract arm 62 retracts.

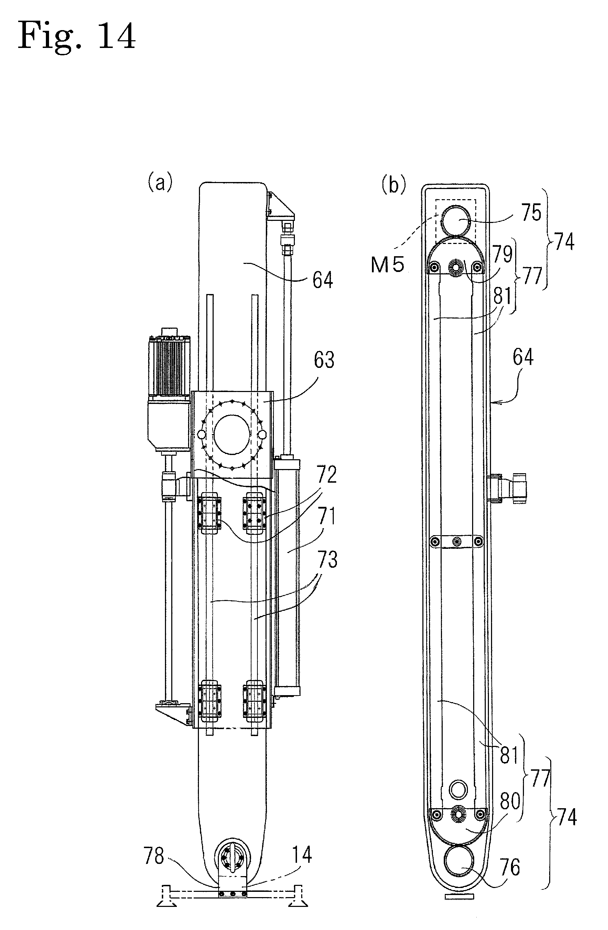

The reference numeral 71 of Figure 13a is a balance cylinder which energizes the sliding arm 64 upward in order to cancel the weight of the sliding arm 64. A spring can be also adopted. As the screw shaft 69 and the nut 70, in order to reduce the friction torque, it is preferable to adopt a ball screw and a ball nut. The structure of the slide portion of the arm holder 63 and the sliding arm 64 is preferable to be composed by a linear motion bearing (linear ball bearing) 72 and a linear motion rail (LM rail) 73 fixed to the sliding arm 64, as shown in Figure 14a. In this case, to receive the torque of rotational direction, two linear motion rails 73 are adopted.

In the extend/retract arm 62 of Figure 14a, 14b, the parallel movement mechanism 24 which keeps the hand 14 of Figure 6 etc. in parallel and the tilt mechanism to drive it from the first arm 12 side can not be provided. Therefore, an independent tilt mechanism 74 is provided in the sliding arm 64 as shown in Figure 14b. This tilt mechanism 74 is composed of a first gear 75 and a second gear 76 rotatably provided in the upper end and the lower end of the sliding arm 64 respectively, a torque transmission mechanism 77 which transmits torque between the first gear 74 and the second gear 76, a fifth motor (reference numeral M5 of Figure 13b) which rotatively drives the first gear 75, and a hand holder 78 coupled with the second gear 76.

The torque transmission mechanism 77 comprises a semicircular sector gear 79 meshing with the first gear 75, a sector gear 80 meshing with the second gear 76, and a link 81 to couple these sector gears 79, 80 mutually. But, other torque transmission mechanisms such as a pulley and a belt, particularly, a timing pulley and a timing belt, or a sprocket and a chain can also be adopted. Moreover, as the forth motor M4 and the fifth motor M5, fluid motors such as air motor or an oil hydraulic motor can be also adopted for saving the weight.

In the tilt mechanism 74 composed as above, when the fifth motor M5 rotates in one direction, the hand holder 78 rotates through the first gear 75, the torque transmission mechanism 77, and the second gear 76, and it control the tilt of the hand 14 holding a vacuum cup. The control of the fifth motor M5 can be used to hold the tilt of the hand 14 horizantly in response to the angle of the extendable arm 62, namely the tilt of the arm holder 63. Further, the control of the fifth motor M5 can also be used to tilt the hand 14 avoiding the interference with the pressing die or a pressing machine.

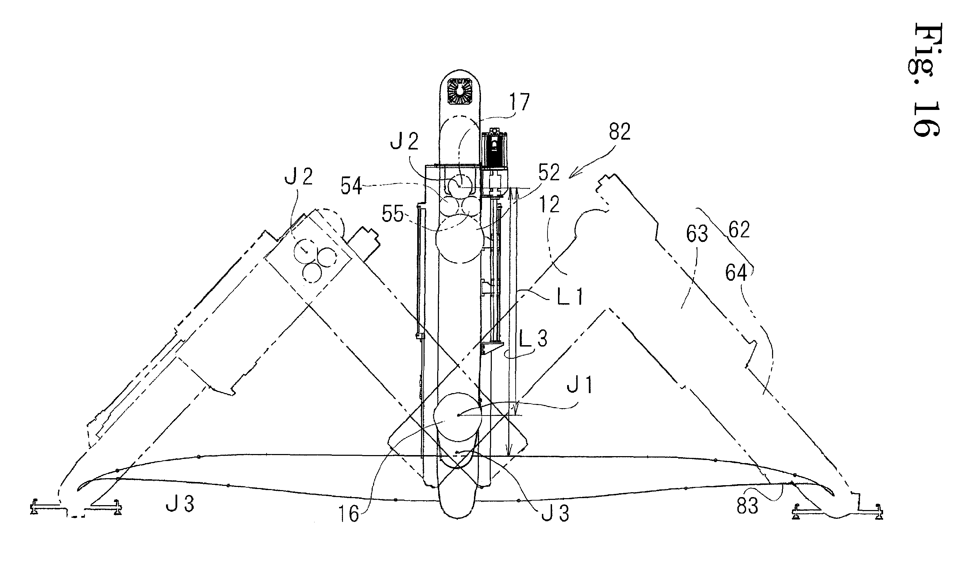

The transferring apparatus 82 shown in Figure 15 and Figure 16 is equipped with the first arm 12 rotatably provided around the first axis J1 to the pedestal and the extend/retract arm 62 provided rotatably around the second axis J2 in the front end of the first arm 12, which are about similar to Figure 1. Since the length of the extend/retract arm 62 extends and retracts freely, as the case of the transferring apparatus 10 of Figure 1, the ratio of the length of the first arm 12 and the extend/retract arm 62, and the ratio of the diameter of the first pinion 16 and the second pinion 17 are not so important. Hence, For example, the length L3 (the distance between the second axis J2 and the turning axis J3 of the hand holder) in the state that the extendable arm 62 is retracted is made to be same as the length L1 of the first arm, the ratio of the diameter of the first pinion (first sector gear) 16 and the diameter of the second pinion 17 can be made to be 2:1. Moreover, the length L3 of the extend/retract arm 62 may be made always longer than the length L1 of the first arm 12, as shown in Figure 16. Further, it may be made shorter in the normal state and may be extended when needed. In this case, the length of the extending arm 62 and the first arm 12 may instantly become congruent, but fundamentally, it is the different length.

In the transferring apparatus 82 of Figure 15, Figure 16 also, the torque transmission can be made by one pair of the left and the right racks between the first pinion 16 and the second pinion 17, same as the case of Figure 1 and Figure 2. In Figure 16, the same diameter intermediate pinion 52 provided in the upper portion of the first arm 16 and the second arm 17 are coupled by one pair of the left and the right racks not shown in the figure. The intermediate pinion 52 and the second pinion 17, fixed to the arm holder 63, are coupled through one pair of idle gears 54, 55. The reason that the racks and the idle gears 54, 55 are provided as one pair left and right, is to eliminate the backlash.

In the transferring apparatus 82 composed as described above, when the first arm 12 is in the central reference position, the extend/retract arm 62 is retracted, and when the apparatus 82 is in the state of retrieving a work in a pressing machine of upstream side (left side of Figure 16), the extend/retract arm 62 is extended, as shown in Figure 16. And, after taking out the work, when it passes the reference position, the extend/retract arm 62 is retracted, and when the apparatus 82 is in the state of placing a work in a pressing machine of downstream side (right side of Figure 16), the extend/retract arm 62 is extended again. And, when returning to the reference position, the extend/retract arm 62 is retracted. Thereby, to the pressing die of the pressing machine of upstream side and down stream side shown by the imaginary line, it can approach from the upper side and can withdraw to the upper direction. Hence, the retrieving of a work from the pressing die and the supply of a work to the pressing die becomes smooth. In the case that there is an obstacle near the pressing die, as shown by the reference numeral 83 of Figure 16, it is possible to overgo the obstacle by partially raising the trajectory of movement of the hand 14. Particularly while it holds a work, the moving trajectory of the hand 14 is selected so that the work does not interfere with the pressing die etc.

The first motor M1 to turn the first arm 12 and the forth motor M4 to move the sliding arm 64 are computer-controlled so as to realize the above described two dimensional trajectory. Moreover, the rotation of the fifth motor M5 of the tilt mechanism 74 of Figure 14b is controlled so as to be electrically synchronized with the swing of the first arm 12. However, the fundamental motion of the transfer is based on the swing of the first arm 12 around the first axis J1 and the turn of the arm holder 63 mechanically coupled to the first arm 12 around the second axis J2. Thereby, the small amount of movement of the sliding arm is sufficient. Hence, a work can be transferred rapidly and safely, compared with the transferring apparatus of Japanese Published Patent Application No.2005-161406.

## Claims

1. A transferring apparatus comprising;
   a pedestal having a first axis;
   a first arm having a base end and a front end, the first arm swingably provided around the first axis, the front end having a second shaft parallel with the first axis;
   a second arm having a length different to the first arm and having a base end and a front end, the second arm swingably provided around the second axis;
   a hand attached to the front end of the second arm;
   a drive means to swing the first arm reciprocatingly;
   a first circular plate having a center and a periphery, the first circular plate attached to the pedestal and the center is within the first axis;
   a second circular plate having a center and a periphery, the second circular plate attached to the base end of the second arm and the shaft and the center is within the second axis; and
   a torque transmission means interposed between the periphery of the first circular plate and the periphery of the second circular plate, in which the torque transmission swings the second arm synchronously with the first arm;
   wherein a ratio of a diameter of the first circular plate and a diameter of the second circular plate is set so that the front end of the second arm moves about linearly when the second arm swings synchronously with the first arm.

2. A transferring apparatus according to claim 1, further comprising, an angle adjusting mechanism of the second arm to adjust an angle of the first circular plate.

3. A transferring apparatus according to claim 1 or claim 2, further comprising,
a parallel movement mechanism to maintain the hand at a predetermined angle to a rest frame regardless of a swing of the first arm.

4. A transferring apparatus comprising;
a pedestal having a first axis;
a first arm having a base end and a front end, the first arm swingably provided around the first axis, the front end having a second axis;
a second arm having a base end and a front end, the second arm swingably provided around the second axis parallel with the first axis;
a third arm having a front end, the third arm protruding from the front end of the second arm, in which the third arm performs liner motion against the second arm;
a hand attached to the front end of the third arm;
a drive means to swing the first arm reciprocatingly;
a first circular plate having a center and a periphery, the first circular plate attached to the pedestal and the center is within the first axis;
a second circular plate having a center and a periphery, the second circular plate attached to the base end of the second arm and the center is within the second axis;
a torque transmission means interposed between the periphery of the first circular plate and the periphery of the second circular plate, in which the torque transmission swings the second arm synchronously with the first arm;
an extend/retract drive means to extend and retract the third arm;
a control means to control so that the front end of the third arm moves about linearly accompanying with a swing of the first arm.

5. A transferring apparatus according to any preceding claim, further comprising;
a tilt mechanism to swing the hand with respect to the second arm or the front end of the third arm.

6. A transferring apparatus according to any preceding claim,
wherein the first circular plate and the second circular plate are pinions, and the torque transmission means is equipped with a rack meshing with the pinions.

7. A transferring apparatus according to claim 6,
wherein the pair of racks are arranged at both sides in left and right of a line connecting the first axis and the second axis, and
wherein at least one pinion is provided to tolerate a variation of a distance to the other pinion, and the one pinion is forced in a departing direction or an approaching direction to the other pinion.

8. A large transferring apparatus for transferring a work comprising;
the transferring apparatus according to any preceding claim arranged as one pair in left and right of a processing machine,
a beam to interconnect the hands of both transferring apparatuses, and a work holding means provided in the beam,
wherein the first axis and the second axis of the left and the right transferring apparatus are arranged concentrically to each other, and
wherein the first axis and the second axis extend perpendicular to a transfer direction of the work and horizontally, and each the left and the right drive means operates synchronously.

# Fig. 1

Fig. 2

Fig. 3

# Fig. 4

# Fig. 5

# Fig. 6

# Fig. 7

Fig. 8

Fig. 9

Fig. 10

EP 2 060 367 A2

13

40

12

13

12

M1

11

# Fig. 11

(a)

(b)

(c)

Fig. 12

(a)

(b)

# Fig. 13

(a)

(b)

62
64
M4
67
66
70
65
71
63
69
68

M5
64
12
65
63

# Fig. 14

(a)

64

63

72

71

73

78   14

(b)

75
74
M5   79
77
81

64

81
77
80   74
76

# Fig. 15

## Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52121262 B
- JP H06143183 B
- JP 2000233393 A
- JP 2002066976 A
- JP 2005238381 A
- JP 2005161406 A